# EUROPÄISCHE PATENTSCHRIFT

(11) **EP 3 733 455 B1**
(45) Veröffentlichungstag und Bekanntmachung des Hinweises auf die Patenterteilung: **29.12.2021**
(21) Anmeldenummer: 20172470.5
(22) Anmeldetag: 30.04.2020
(51) Int. Cl.: B60R 1/00

(54) **SICHTSYSTEM FÜR EIN FAHRZEUG**
VIEW SYSTEM FOR A VEHICLE
SYSTÈME VISUEL POUR UN VÉHICULE

(30) Priorität: 03.05.2019 DE 102019111512
(43) Veröffentlichungstag der Anmeldung: 04.11.2020
(73) Patentinhaber: MEKRA Lang GmbH & Co. KG, 91465 Ergersheim (DE)
(72) Erfinder: Lang, Werner, 91465 Ergersheim (DE); Centmayer, Stefan, 91465 Ergersheim (DE); Traub, Christian, 91522 Ansbach (DE)
(74) Vertreter: Kramer Barske Schmidtchen Patentanwälte PartG mbB

(56) Entgegenhaltungen:
- EP-A1- 3 437 929
- DE-A1- 4 132 425
- DE-A1-102006 044 786
- DE-A1-102014 006 153

## Beschreibung

### TECHNISCHES GEBIET

Die vorliegende Erfindung betrifft ein Sichtsystem für ein Fahrzeug, insbesondere für einen Fahrer eines Fahrzeugs oder für ein Fahrerassistenzsystem, und betrifft insbesondere ein Sichtsystem, das eine Verschmutzung eines optischen Elements des Sichtsystems kenntlich macht.

### HINTERGRUND

Bei Kraftfahrzeugen ist es gesetzlich vorgeschrieben, sogenannte Sichtfelder rund um das Fahrzeug für den Fahrer im Fahrbetrieb einsehbar zu machen. Welche Sichtfelder einsehbar sein müssen, basiert auf dem Typ des Kraftfahrzeugs, zum Beispiel Krafträdern, Kraftfahrzeuge zum Transportieren von Passagieren, Kraftfahrzeuge zum Transportieren von Gütern, etc. Die Einsehbarkeit der Sichtfelder muss von einer Einrichtung zur indirekten Sicht bereitgestellt werden und die Sichtfelder müssen die ganze Zeit von dem Fahrer, der auf dem Fahrersitz sitzt, unter Verwendung der Einrichtung zur indirekten Sicht einsehbar sein. Abhängig von dem Typ des Fahrzeugs und insbesondere davon, welche Gebiete um das Fahrzeug herum von dem Fahrer direkt eingesehen werden können, fordern verschiedene gesetzliche Vorgaben, dass bestimmte Sichtfelder jederzeit permanent und zuverlässig unter Verwendung der Einrichtungen zur indirekten Sicht sichtbar sind. In Europa sind die Sichtfelder, die für einen Fahrer jederzeit zuverlässig einsehbar sein müssen, in der UN/ECE-Richtlinie Nr. 46 definiert. Weitere relevante Normen bzw. Richtlinien schließen beispielsweise die ISO 5721, ISO 5006, ISO 16505, ISO14401 und die EU 167/2013 ein. Neben den gesetzlich geforderten Sichtfeldern werden oftmals weitere Bereiche rund um das Fahrzeug, sogenannte Sichtbereiche, durch Einrichtungen zur indirekten Sicht einsehbar gemacht. Sichtbereiche können gesetzlich vorgeschriebene Sichtfelder enthalten.

Üblicherweise wird die Betrachtung der Sichtfelder mit einem oder mehreren Spiegeln ermöglicht. Jedoch haben Spiegel einige Nachteile. Zum Beispiel zeigen Spiegel dem Fahrer lediglich Objekte, die auf derselben Seite des Spiegels wie der Fahrer sind. Irgendein Objekt hinter einem Spiegel kann nicht durch diesen Spiegel gezeigt werden. Zusätzlich zeigen Spiegel, die lediglich aus flachem Glas hergestellt sind, dem Fahrer einen kleinen Bereich, außer die Spiegel sind sehr nahe bei dem Fahrer. Falls sie konvex geformt sind, erzeugt dies eine Bildverzerrung. Große Fahrzeuge weisen üblicherweise sechs oder mehr Spiegel auf, die um die Außenseite des Fahrzeugs herum montiert sind, von denen die meisten konvex und verzerrt sind, was es schwierig für den Fahrer macht, auf alle relevanten Spiegel zur selben Zeit zu achten. Dennoch gibt es um diese Fahrzeuge trotz all der Spiegel üblicherweise immer noch blinde Flecke in den Sichtbereichen, d.h. den Bereichen, in denen keine Sichtfelder sind.

In letzter Zeit wurde es zunehmend üblich, eine Verwendung von Kamerasystemen als Einrichtungen zur indirekten Sicht entweder zusätzlich oder als Ersatz für die Spiegel als Einrichtungen zur indirekten Sicht in Betracht zu ziehen. In solchen Kamerasystemen wird kontinuierlich ein Bild erfasst und ermittelt bzw. bearbeitet und ggf. gespeichert. Die (Video-)Daten, die von einer Bilderfassungseinheit mit einer Bildsensoreinrichtung erfasst werden, werden, beispielsweise unter Verwendung einer Versorgungseinheit und optional nach einer Weiterbearbeitung, zu einer Anzeigeeinrichtung, die sich in der Fahrerkabine befindet, weiter geleitet. Die Anzeigeeinrichtung bildet eine Ansicht des entsprechenden gesetzlich vorgeschriebenen Sichtfelds oder einer Vielzahl von Sichtfeldern und optional weitere Informationen, wie beispielsweise mögliche Kollisionsrisiken, Abstände zu anderen Objekten, etc., für das Gebiet um das Fahrzeug herum auf eine Art und Weise ab, dass die Sichtfelder jederzeit für den Fahrer permanent einsehbar sind. Gleichzeitig liefern Sichtsysteme eine verbesserte Nachtansicht, flexiblere, ergonomischere Anordnungsmöglichkeiten und die Möglichkeit, größere Sichtbereiche mit einer geringeren Verzerrung einzusehen.

Permanent einsehbar bedeutet in diesem Zusammenhang, dass die Ansicht des Sichtfelds in einer zeitlich ununterbrochenen Art und Weise abgebildet wird, d.h., nicht durch abwechselndes Anzeigen und Verbergen des Sichtfelds oder von Teilen davon, oder durch Einblenden anderer Darstellungen derart unterbrochen wird, dass das Sichtfeld nicht komplett gesehen werden kann. Entsprechend werden das entsprechende Sichtfeld oder die Sichtfelder kontinuierlich und in Echtzeit auf der Anzeigeeinrichtung gezeigt bzw. einsehbar gemacht. Dies gilt zumindest für als permanent einsehbar vorgeschriebene Sichtfelder für alle Fahrzeugzustände, bei denen der Zündschalter eingeschaltet ist und/oder bevorzugter Weise zum Beispiel gekoppelt an einen Sensor, der ein entsprechendes Signal empfängt, beispielsweise eine Türöffnungssignal oder ein Zündungseinschaltsignal.

Üblicherweise werden die Kamerasysteme an einer Außenseite des Kraftfahrzeugs montiert, um einen Bereich um das Fahrzeug aufzunehmen. Durch die Montage an einer Außenseite des Kraftfahrzeugs sind die Kamerasysteme jedoch Umwelteinflüssen, wie z.B. Verschmutzungen oder Niederschlag ausgesetzt. Insbesondere können sich Fremdkörper, wie Schmutzpartikel oder Regentropfen, auf der Linse der Kamera oder generell einem die Kamera nach außen hin abschließenden Element ablagern und dadurch die von der Kamera aufgenommenen Bilddaten der Fahrzeugumgebung beeinträchtigen. Insbesondere kann es bei verschmutzten Kameralinsen vorkommen, dass Objekte oder Personen in der Fahrzeugumgebung teilweise oder vollständig durch den Fremdkörper verdeckt werden und so dem Fahrer nicht oder nicht zufriedenstellend auf einer üblicherweise in der Fahrerkabine montierten Wiedergabeeinrichtung angezeigt werden. Dies wiederum führt dazu, dass der Fahrer die Objekte oder Personen nicht ausreichend oder gar nicht erkennt. Dadurch kann es zu Kollisionen mit den vom Fahrer nicht erkannten Objekten oder Personen und so möglicherweise zu schweren Unfällen kommen.

Linsenverschmutzungen werden derzeit über Bilderkennungsprogramme oder Sichtkontrolle der Kamera durch den Fahrer erkannt. Bilderkennungsprogramme ermitteln eine Linsenverschmutzung allein anhand bekannter Muster, die in einer Datenbank gespeichert sind. Da es aber unendlich viele Muster gibt, die nicht alle in der Datenbank gespeichert werden können, ist die Erkennung einer Linsenverschmutzung über Bilderkennungsprogramme ungenau. Die Sichtkontrolle durch den Fahrer kann üblicherweise nur bei Fahrzeugstillständen erfolgen und ist daher ebenfalls nicht zufriedenstellend.

Beispielsweise ist ein Kamerasystem aus der DE 10 2006 044 786 A1 bekannt, das eine Verschmutzung mittels Prüfstrahl detektiert. Ein Verfahren zur Bilddarstellung eines indirekten Sichtfeldes im Fahrzeugumfeld eines Fahrzeugs ist aus der DE 10 2014 006 153 A1 bekannt.

### ZUSAMMENFASSUNG

Entsprechend ist es eine Aufgabe der vorliegenden Erfindung, ein Sichtsystem für ein Fahrzeug, insbesondere für einen Fahrer eines Fahrzeugs, wie z.B. eines Nutzfahrzeugs, oder für ein Fahrerassistenzsystem, vorzusehen, das es ermöglicht, einen oder mehrere Fremdkörper auf dem optischen Element einer Bildaufnahmeeinheit zuverlässig zu erkennen.

Die oben genannte Aufgabe wird durch ein Sichtsystem für ein Fahrzeug mit den Merkmalen des Anspruchs 1 gelöst. Bevorzugte Ausführungsformen sind in den abhängigen Ansprüchen angegeben.

Der Erfindung liegt der Gedanke zugrunde, ein Sichtsystem mit wenigstens einer Bildaufnahmeeinheit (z.B. einer Kamera), wenigstens einer Bildbearbeitungseinheit (z.B. einer ECU) und wenigstens einer Lichtquelle bereitzustellen, wobei die Lichtquelle derart in dem Sichtsystem angeordnet ist, dass sie das optische Element der Bildaufnahmeeinheit von außerhalb der Bildaufnahmeeinheit beleuchtet. Durch die Beleuchtung des optischen Elements wird, sollte sich ein Fremdkörper auf dem optischen Element befinden, der Fremdkörper auf dem Bildsensor gut erkennbar abgebildet, d.h. deutlicher als ohne zusätzliche Beleuchtung. Es wird also keine Bildbearbeitung anhand von bekannten Mustern, d.h. keine Bilderkennung, zur Identifizierung eines oder mehrerer Fremdkörper durchgeführt, sondern durch Bestrahlung des Fremdkörpers eine kontrastreichere bzw. eine hervorgehobene Abbildung des Fremdkörpers unmittelbar auf dem Bildsensor erzeugt. Es ist also keine Nachbearbeitung der von dem Bildsensor aufgenommenen Bilddaten hinsichtlich der Fremdkörpererkennung erforderlich, sondern der Fremdkörper wird bereits deutlich auf dem Bildsensor abgebildet, so dass eine nachträgliche Bearbeitung der von der Bildaufnahmeeinheit aufgenommenen Bilddaten im Hinblick auf die Darstellung des Fremdkörpers unnötig ist. So wird auf einfache Art und Weise eine realitätsnahe, fehlerarme Darstellung von Fremdkörpern auf optischen Elementen von Bildaufnahmeeinheiten zuverlässig erzeugt, die entweder vom Fahrer oder von einer Bilderkennungseinheit als Element eines Fahrerassistenzsystems erkannt werden können. Bei dem Fahrzeug kann es sich um jedes Fahrzeug handeln, wie einen Lastkraftwagen (LKW), einen Personenkraftwagen (PKW) oder ähnliches.

Unter einem optischen Element ist allgemein jedes Element zu verstehen, den ein auf dem Bildsensor der Bildaufnahmeeinheit abzubildender einfallender Lichtstrahl passiert, d.h. z.B. auch eine Anordnung mehrerer Einzelbauteile, wie z.B. Linsen.

Unter einer guten und deutlichen Erkennbarkeit ist ein verstärkter Kontrast bzw. eine erhöhte Auffälligkeit bzw. eine optische Hervorhebung des sich auf dem optischen Element befindlichen Fremdkörpers zu verstehen. Der Fremdkörper wird somit durch die Bestrahlung mit Licht optisch auf dem Bildsensor hervorgehoben, so dass die Abbildung des optisch hervorgehobenen Fremdkörpers auf dem Bildsensor ohne weitere Bildbearbeitung genutzt werden kann. Die Verwendung umständlicher und fehleranfälliger oder ungenauer Bildbearbeitungsprogramme entfällt.

Erfindungsgemäss ist die Lichtquelle derart in dem Sichtsystem angeordnet, dass die von ihr ausgesandten Lichtstrahlen von außerhalb der Bildaufnahmeeinheit in das optische Element einfallen. Mit anderen Worten laufen die von der Lichtquelle ausgesandten Lichtstrahlen von außerhalb der Bildaufnahmeeinheit durch das optische Element hindurch und treffen danach auf dem hinter dem optischen Element angeordneten Bildsensor bzw. der Bildsensorfläche auf. Außerhalb der Bildaufnahmeeinheit heißt, von außerhalb der Einheit aus optischem Element und Bildsensor. D.h. die Lichtquelle ist räumlich nicht zwischen dem optischen Element und dem Bildsensor angeordnet und bestrahlt das optische Element nicht von innen (innerhalb der Bildaufnahmeeinheit), z.B. indem wenigstens ein Teil der von der Lichtquelle ausgesandten Lichtstrahlen nach Auftreffen auf einen Fremdkörper wieder durch das optische Element zurückläuft. Vielmehr laufen die Lichtstrahlen nur einmal durch das optische Element, insbesondere das am weitesten außen angeordnete Bauteil des optischen Elements, hindurch bzw. zumindest passieren sie zumindest das am weitesten außen angeordnete Bauteil des optischen Elements das erste Mal von außen nach innen, und zwar von einer zur Fahrzeugumgebung gerichteten Seite des optischen Elements zu einer zum Bildsensor gerichteten Seite des optischen Elements. So wird ein Strahlenverlust oder eine unerwünschte Ablenkung von Strahlen vermieden und somit ein zuverlässiges Abbilden eines etwaigen Fremdkörpers auf dem Bildsensor ermöglicht.

Nach einer bevorzugten Ausführungsform enthält das Sichtsystem ferner wenigstens eine Ausgabeeinheit, wie eine Bildwiedergabeeinheit zum Wiedergeben der auf dem Bildsensor abgebildeten Bilddaten. Die wenigstens eine Bildwiedergabeeinheit kann z.B. ein Monitor sein, wie beispielsweise ein LCD-, TFT- oder LED-Monitor, der derart in der Fahrerkabine montiert ist, dass der Fahrer den Monitor jederzeit gut einsehen kann, z.B. an einer oder beiden A-Säulen oder mittig in der Fahrerkabine.

Alternativ oder zusätzlich kann das Sichtsystem als eine Ausgabeeinheit eine Bilderkennungseinheit aufweisen, die die verdeutlichte Erkennbarkeit des Fremdkörpers auf dem Bildsensor über einen Algorithmus erkennt. Der Algorithmus kann ein Berechnungsverfahren sein, das als Softwareprogramm in der Bildbearbeitungseinheit oder einer separaten Steuereinheit gespeichert ist. Die Bilderkennungseinheit ist Teil eines Fahrerassistenzsystems. Die Bilder der Bilderkennungseinheit werden beispielsweise immer dann ausgewertet, wenn der Fahrer nicht auf den Monitor schaut und damit einen möglichen Fremdkörper nicht erkennen kann. Dabei ist es unter anderem möglich, die Bilderkennungseinheit anzusteuern, wenn die Bildbearbeitungseinheit oder eine weitere Steuerungseinheit anhand des Fahrerverhaltens (z.B. eye-tracking) erkennt, dass dieser nicht auf den Monitor schaut. Alternativ oder zusätzlich kann die Bilderkennungseinheit angesteuert werden, wenn der Fahrer zwar auf den Monitor schaut, aber keinen Fremdkörper erkennen kann, z.B. weil der auf dem Monitor dargestellte Fremdkörper für das menschliche Auge zu klein ist oder weil, wenn ein Lichtpulsverfahren angewendet wird, das abhängig von der Bildrate des Bildsensors oder der Wiedergabeeinheit ist, der Fremdkörper immer nur beleuchtet wird, wenn gerade kein Bild von dem Bildsensor an die Bildbearbeitungseinheit weitergegeben wird und/oder von dem Monitor angezeigt wird.

Detektiert die Bilderkennungseinheit einen Fremdkörper, gibt sie an ein geeignetes Reinigungsmittel (automatische Reinigungsanlage) ein Signal zur Entfernung des Fremdkörpers und/oder ein Warnsignal an den Fahrer aus. Die Entfernung des Fremdkörpers kann durch Ansteuerung einer Linsenreinigung erfolgen. Das an den Fahrer ausgegebene Signal kann z.B. eine Overlayanzeige auf Monitor, die den Fremdkörper optisch hervorhebt, z.B. durch Markierung oder Hervorhebung, und/oder ein Signalton sein. Alternativ kann die Bilderkennungseinheit bei Detektion eines Fremdkörpers auch ein Signal an die Bildbearbeitungseinheit oder eine andere separate Steuereinheit ausgeben, die dann wiederum ein Signal zur Entfernung des Fremdkörpers und/oder ein Signal an den Fahrer ausgibt. Es ist auch denkbar, dass die Bilderkennungseinheit oder jede andere Steuereinheit des Sichtsystems in den Fahrbetrieb eingreift, z.B. als Fahrerassistenzsystem das Fahrzeug abbremst, sollte der Fahrer nicht auf das an ihn ausgegebene Signal reagieren und z.B. eine Kollision mit einem Objekt, das sich in der Fahrzeugumgebung im Bereich auf dem Bildsensor befindet, wo ein Fremdkörper die Sicht verdeckt oder verfälscht, bevorstehen.

Dabei ist es bevorzugt, dass die Lichtquelle außerhalb des Sichtbereichs des optischen Elements angeordnet ist, d.h. insbesondere außerhalb des Bereichs, der auf dem Bildsensor abgebildet wird. Der Sichtbereich des optischen Elements kann beispielsweise ein Kegel sein, der sich vom optischen Element ausgehend in Richtung nach außen, d.h. zur Fahrzeugumgebung aufspannt.

Nach einer bevorzugten Ausführungsform wird der Kontrast des Fremdkörpers auf dem Bildsensor durch Reflexion und/oder Absorption der von der Lichtquelle ausgesandten Lichtstrahlen an dem Fremdkörper verdeutlicht. Handelt es sich bei dem Fremdkörper z.B. um einen hellen oder gar durchsichtigen (transparenten) Fremdkörper, wie z.B. einen Wassertropfen, werden die Lichtstrahlen der Lichtquelle an der Außenseite des Fremdkörpers reflektiert. Handelt es sich bei dem Fremdkörper z.B. um einen dunklen oder gar undurchsichtigen bzw. halbtransparenten (opaken) Fremdkörper, wie z.B. ein Erdklumpen, eine dünne Schicht Staub, die die Fahrzeugumgebung wie durch einen Schleier betrachtet auf dem Bildsensor abbildet, oder eine Kombination aus Erdklumpen und Wassertropfen, werden die Lichtstrahlen der Lichtquelle von dem Fremdkörpers absorbiert. Je nach Struktur bzw. Aufbau des Fremdkörpers mit teilweise undurchsichtigen und durchsichtigen Bereichen sind jedoch auch Mischformen aus Reflexion und Absorption denkbar. Eine Reflexion bzw. Absorption eines Fremdkörpers erhöht die optische Auffälligkeit des Fremdkörpers auf dem Bildsensor.

Die von der Lichtquelle ausgesandten Lichtstrahlen treffen entweder direkt oder indirekt von außen auf das optische Element auf. Ein direktes Auftreffen wird durch geeignete Anordnung der Lichtquelle derart zum optischen Element erzeugt, dass die Lichtstrahlen ohne Umwege oder Umlenkungen von außen auf das optische Element auftreffen. Bei einem indirekten Auftreffen erfolgt eine Umlenkung der Lichtstrahlen der Lichtquelle vor Auftreffen auf das optische Element mit Hilfe eines geeigneten Umlenkmittels, wie z.B. eines Prismas oder spiegelnden Flächen. Ein indirektes Auftreffen kann beispielsweise erforderlich sein, wenn der Aufbau des Sichtsystems es nicht zulässt, die Lichtquelle derart innerhalb des Sichtsystems anzuordnen, dass ihre Lichtstrahlen unmittelbar, d.h. auf direktem Weg auf das optische Element auftreffen, insbesondere ohne dass die Lichtquelle selbst im Sichtfeld liegt, z.B. weil der Bauraum eine solche Anordnung nicht zulässt.

Vorzugsweise wird die Lichtquelle derart angesteuert, dass der Hauptteil der von ihr ausgesandten Lichtstrahlen auf einen Bereich des optischen Elements auftreffen, der auf dem Bildsensor abgebildet wird. Das bedeutet, dass der Fokus der von der Lichtquelle ausgesandten Lichtstrahlen und damit der Großteil der Lichtstrahlen auf den Bereich des optischen Elements auftreffen, der auf dem Bildsensor abgebildet wird. Dies vermeidet, dass das gesamte optische Element beleuchtet wird und der Fahrer oder Personen in der Fahrzeugumgebung durch eine großflächige Beleuchtung irritiert werden, und spart Kosten. Eine an die Abbildung auf dem Bildsensor angepasste Beleuchtung kann beispielsweise durch eine bewegliche Lichtquelle und/oder durch eine entsprechende Anordnung der Lichtquelle realisiert werden, die über die Bildbearbeitungseinheit oder eine andere Steuereinheit an den Ausschnitt der Fahrzeugumgebung, der auf dem Bildsensor abgebildet wird, angepasst wird.

Vorzugsweise kann die Lichtquelle dazu ausgebildet sein, mit unterschiedlichen Lichtwellen zu operieren. Beispielsweise kann die Lichtquelle Lichtwellen aussenden, die für das menschliche Auge sichtbar sind. Zusätzlich oder alternativ kann die Lichtquelle eine Infrarot-Lichtquelle sein, die Lichtwellen im nahen, mittleren und/oder fernen Infrarotbereich aussendet. Dabei haben die Lichtwellen vorzugsweise unterschiedliche Farben, die weiter bevorzugt abhängig von der Umgebung gewählt werden. Z.B. können die Lichtwellen bei dunkler Umgebung rotes Licht aufweisen oder bei heller Umgebung weißes Licht aufweisen.

Unabhängig von der Lichtwellenlänge kann die Lichtquelle dazu ausgebildet sein, dauerhaft oder in zeitlich definierten Abständen zu operieren. Durch einen dauerhaften Betrieb der Lichtquelle kann vermieden werden, dass der Fahrer durch Lichtimpulse gestört wird. Durch einen zeitlich unterbrochenen Betrieb der Lichtquelle kann vermieden werden, dass der Fahrer durch den dauerhaft erzeugten Kontrast gestört wird oder die Umgebung unnatürlich wahrnimmt.

Vorzugsweise ist die Lichtquelle ausgebildet, abhängig von der Bildrate des Bildsensors und/oder der Bilderkennungseinheit bzw. der Wiedergabeeinheit zu operieren. Die Bildrate des Bildsensors beschreibt, wie oft der Bildsensor Bilddaten an Bildbearbeitungseinheit weitergibt. Die Bildrate der Bilderkennungseinheit bzw. der Wiedergabeeinheit beschreibt, wie oft ein Bild in einer definierten Zeitspanne von der Bilderkennungseinheit erkannt bzw. auf der Wiedergabeeinheit angezeigt wird. Ist der Betrieb der Lichtquelle von der Bildrate des Bildsensors und/oder der Bilderkennungseinheit bzw. der Wiedergabeeinheit abhängig, kann z.B. ein Bild an die Bildbearbeitungseinheit weitergegeben werden bzw. von der Bilderkennungseinheit erkannt oder auf der Wiedergabeeinheit angezeigt werden, wenn die Beleuchtung ausgeschaltet ist, und kein Bild an die Bildbearbeitungseinheit weitergegeben werden bzw. von der Bilderkennungseinheit erkannt oder auf der Wiedergabeeinheit angezeigt werden, wenn die Beleuchtung eingeschaltet ist. Da die Bildrate des Bildsensors und/oder der Bilderkennungseinheit bzw. der Wiedergabeeinheit für menschliches Auge nicht sichtbar sind, werden Fremdkörper trotzdem zuverlässig auf dem Bildsensor abgebildet und können damit von der Bilderkennungseinheit erkannt bzw. auf der Wiedergabeeinheit abgebildet bzw. angezeigt werden. Fremdkörper werden somit auch durch Beleuchtungsimpulse erkannt. Beispielsweise können die Daten der auf dem Bildsensor abgebildeten, aber auf der Wiedergabeeinheit nicht gezeigten beleuchteten Zeiträume separat ausgewertet werden, so dass ein Fremdkörper erkannt wird, aber der Fahrer durch die Beleuchtung nicht gestört wird.

Vorzugsweise wird das An- und Abschalten der Lichtquelle bzw. des Vorgangs zur Fremdkörpererkennung durch Beleuchtung des optischen Elements durch wenigstens ein Signal gesteuert. Dabei kann das wenigstens eine Signal von einem Helligkeitssensor, einem Regensensor oder einem Taster ausgegeben werden. Oder es können fahrzeugspezifische Signale wie eine Geschwindigkeit, die von einem Geschwindigkeitssensor oder aus Positionierungssystem-Daten (z.B. GPS-Daten) ermittelt wird, ein Lenkwinkel, der von einem Winkelsensor ermittelt wird, eine Rückwärts- und Vorwärtsfahrt, die aus einen jeweils eingelegten Gang ermittelt wird, etc. als Signale zur Steuerung der Lichtquelle verwendet werden. Alternativ oder zusätzlich ist es natürlich auch denkbar, dass der Fahrer durch ein manuelles Signal (wie z.B. das Drücken eines Knopfes, das Bewegen eines Hebels, das Bedienen eines Touchpads, das auch der Monitor der Bildwiedergabeeinheit sein kann, oder ähnliches) oder durch sein Verhalten selbst (wie z.B. über eye-tracking) die Lichtquelle steuern kann.

Nach einer bevorzugten Ausführungsform weist die Lichtquelle eine Lichtstärke und/oder eine Leuchtdichte und/oder einen Lichtstrom auf, die jeweils einstellbar sind. Die Lichtstärke gibt den auf den Raumwinkel bezogenen Lichtstrom an. Die Leuchtdichte beschreibt die Helligkeit des Lichts bezogen auf eine bestimmte Fläche. Unter einem Lichtstrom wird die Summe der Lichtenergie verstanden, die von einer Lichtquelle unabhängig der Richtung abgegeben wird. Beispielsweise kann die Leuchtstärke von der Umgebungshelligkeit abhängen, die von dem Helligkeitssensor ermittelt wird. Z.B. je heller die Fahrzeugumgebung, desto stärker muss die Leuchtquelle leuchten, um einen Fremdkörper auf der Wiedergabeeinheit hervorzuheben, und je dunkler die Fahrzeugumgebung, desto schwächer muss die Leuchtquelle leuchten, um einen Fremdkörper auf der Wiedergabeeinheit hervorzuheben.

Dabei ist die Lichtquelle vorzugsweise derart zu dem optischen Element angeordnet ist, dass ihre ausgesandten Strahlen aus definierten Blickrichtungen in der Fahrzeugumgebung für das menschliche Auge nicht sichtbar ist. D.h. eine Person, die von außerhalb auf das Fahrzeug schaut, erkennt das Vorhandensein der Lichtquelle nicht. Dazu weist die Lichtquelle z.B. eine geeignete Abschirmung auf, wie z.B. ein Abschirmblech, die die von der Lichtquelle ausgesandten Lichtstrahlen auf das optische Element lenkt bzw. vermeidet, dass die von der Lichtquelle ausgesandten Lichtstrahlen zur Umgebung des Fahrzeugs gelangen. Insbesondere ist es bevorzug, dass die Abschirmung derart ausgebildet ist, dass bei Verwendung von rotem Licht, dieses nur von der Fahrzeugrückseite bzw. von hinten zu sehen ist, bei Verwendung von orangem Licht, dieses nur von Fahrzeugseite zu sehen ist, und bei Verwendung von weißem Licht dieses nur von der Fahrzeugvorderseite bzw. von vorne zu sehen ist.

Das äußerste Bauteil des optischen Elements kann z.B. ein Frontglas oder eine Linse sein. Allgemein ist das optische Element das Element der Bildaufnahmeeinheit, das sich in einem optischen Pfad, d.h. dem Weg, den das Licht zurücklegt, wenn es aus der Lichtquelle oder der Fahrzeugumgebung durch die Bildaufnahmeeinheit hindurch läuft, zwischen der Position, an der das Licht in die Bildaufnahmeeinheit eintritt, und der Position befindet, an der das Licht auf den Bildsensor auftrifft. Mit anderen Worten handelt es sich bei dem optischen Element um ein Element der Bildaufnahmeeinheit, das sich bis zur äußersten Position der Bildaufnahmeeinheit erstreckt und damit das Element der Bildaufnahmeeinheit bildet, das auf die Umgebung des Fahrzeugs gerichtet ist.

Vorzugsweise weist das optische Element einen Filter auf, der bei Beleuchtung wenigstens einen Lichtparameter verändert. Beispielsweise kann der Filter derart ausgebildet sein, dass die Wellenlänge des Lichts im Bereich von Fremdkörpern verändert wird im Vergleich zu der, wenn das Licht den Filter ungehindert passiert. Z.B. kann das optische Element einen Infrarotfilter aufweisen, der derart ausgebildet ist, dass rotes Licht von einer Bilderkennungseinheit detektiert bzw. erkannt werden kann, für das menschliche Auge jedoch nicht sichtbar ist. Vorzugsweise ist der Filter eine Beschichtung, die auf das optische Element aufgebracht ist, so dass Stellen des optischen Elements, wo Fremdkörper sind, bei Beleuchtung anders leuchten als Stellen, wo keine Fremdkörper sind. Dies kann vor allem bei Verwendung von Schwarzlicht vorteilhaft sein, ist aber auch für Licht mit jeder anderen Wellenlänge denkbar.

Bevorzugter Weise befindet sich die Lichtquelle in räumlicher Nähe zum optischen Element. Z.B. ist es vorteilhaft, wenn sich die Lichtquelle in einem Bereich von 0 bis 50 mm vom optischen Element entfernt befindet, weiter vorzugsweise im Bereich von 0 bis 30 mm, weiter vorzugsweise von 0 bis 15 mm, noch weiter vorzugsweise im Bereich von 0 bis 10 mm. Dabei kann die Lichtquelle im Gehäuse der Bildaufnahmeeinheit integriert sein, z.B. so dass sie vor Umwelteinflüssen geschützt ist, oder außerhalb der Bildaufnahmeeinheit angeordnet sein, z.B. so dass sie gut zugänglich und damit leicht zu warten ist. Wenn die Lichtquelle außerhalb der Bildaufnahmeeinheit angeordnet ist, kann sie am Fahrzeug oder dem Gehäuse der Bildaufnahmeeinrichtung direkt oder über eine geeignete Vorrichtung am Fahrzeug oder dem Gehäuse der Bildaufnahmeeinrichtung angebracht sein.

Nach einer bevorzugten Ausführungsform können mehrere Lichtquellen für jede Kamera (d.h. das optische Element) vorhanden sein. Diese können in regelmäßigen oder unregelmäßigen Abständen umlaufend um das optische Element angeordnet sein. Wenn mehrere Lichtquellen verwendet werden, können diese zu unterschiedlichen Zeitpunkten oder gleichzeitig angesteuert werden. Die Steuerung der einzelnen Lichtquellen kann abhängig von einem oder mehreren Signalen erfolgen, die z.B. von einem Helligkeitssensor, einem Regensensor oder einem Taster ausgegeben werden. Oder es können fahrzeugspezifische Signale wie eine Geschwindigkeit, die von einem Geschwindigkeitssensor oder aus Positionierungssystem-Daten (z.B. GPS-Daten) ermittelt wird, ein Lenkwinkel, der von einem Winkelsensor ermittelt wird, eine Rückwärts- und Vorwärtsfahrt, die aus einen jeweils eingelegten Gang ermittelt wird, etc. als Signale zur Steuerung der Lichtquelle verwendet werden. Alternativ oder zusätzlich ist es denkbar, dass der Fahrer durch ein manuelles Signal (wie z.B. das Drücken eines Knopfes, das Bewegen eines Hebels, das Bedienen eines Touchpads, das auch der Monitor sein kann, oder ähnliches) oder durch sein Verhalten selbst (wie z.B. über eye-tracking) die Lichtquelle steuern kann.

Vorzugsweise werden die Lichtstrahlen der mehreren Lichtquellen vor Auftreffen auf das optische Element gebündelt, z.B. durch geeignete Umlenksysteme, wie Linsen, Prismen, Blenden, etc.

Alternativ oder zusätzlich kann die Lichtquelle mit einem Lichtleiter versehen sein bzw. durch einen Lichtleiter gebildet werden, der die Lichtstrahlen lenkt. Dabei kann der Lichtleiter direkt an der Lichtquelle, z.B. als Linse, Lichtleiterstrang, Lichtleiterelement, wenigstens teilweise um optisches Element herum, angeordnet sein. Allgemein ist ein Lichtleiter ein wenigstens überwiegend transparentes Medium, das ausgebildet ist, Licht über eine bestimmte Wegstrecke zu leiten.

Die Lichtquelle kann z.B. eine LED (light-emitting diode, lichtemittierende Diode, auch Lumineszenz-Diode genannt) oder eine OLED (organic light emitting diode) oder ein Laser oder eine Diode oder eine Glühbirne oder eine Halogenleuchte oder eine Schwarzlichtleuchte sein. Bei der Verwendung von mehreren Lichtquellen sind auch Kombinationen der oben genannten Lichtquellen möglich.

Vorzugsweise ist das Sichtsystem ein Spiegelersatzsystem für ein Nutzfahrzeug, weiter vorzugsweise ein Spiegelersatzsystem nach der Richtlinie UN/ECE R46. Dabei kann das Spiegelersatzsystem ein Kamera-Monitor-System für eines oder mehrere der Sichtfelder I bis VI der UN/ECE R46 sein.

Ein weiterer Aspekt der vorliegenden Erfindung betrifft ein Spiegelersatzsystem für ein Fahrzeug mit einem Sichtsystem wie oben beschrieben.

### KURZE BESCHREIBUNG DER ZEICHNUNGEN

Im Folgenden wird die Erfindung beispielhaft unter Bezugnahme auf die angehängten Figuren beschrieben, in denen:
Fig. 1 eine Draufsicht auf ein Nutzfahrzeug zeigt, das je ein erfindungsgemäßes Sichtsystem an einer linken und rechten Seite einer Fahrerkabine aufweist;
Fig. 2 einen schematischen Aufbau zweier erfindungsgemäßer Sichtsysteme zeigt,
Fig. 3 eine schematische Ansicht eines der Sichtsysteme aus Fig. 2 zeigt,
Fig. 4 eine schematische Ansicht des Sichtsystems aus Fig. 3 mit Fremdkörpern auf dem optischen Element einer Bildaufnahmeeinheit (ohne Beleuchtung) zeigt,
Fig. 5 eine schematische Ansicht des Sichtsystems aus Fig. 4 mit Fremdkörpern auf dem optischen Element einer Bildaufnahmeeinheit (mit Beleuchtung) zeigt,
Fig. 6 eine schematische Ansicht des Sichtsystems aus Fig. 4 mit beleuchteten Fremdkörpern bei Dunkelheit zeigt,
Fig. 7 eine schematische Ansicht des Sichtsystems aus Fig. 4 mit beleuchteten Fremdkörpern mit Schattenbildung zeigt, und
Fig. 8 eine Bildaufnahmeeinheit zeigt, die von zwei Leuchtquellen beleuchtet wird. Hierbei fallen die von der Lichtquelle ausgesandten Lichtstrahlen von innerhalb der Bildaufnahmeeinheit in das optische Element.

### DETAILLIERTE BESCHREIBUNG DER ERFINDUNG

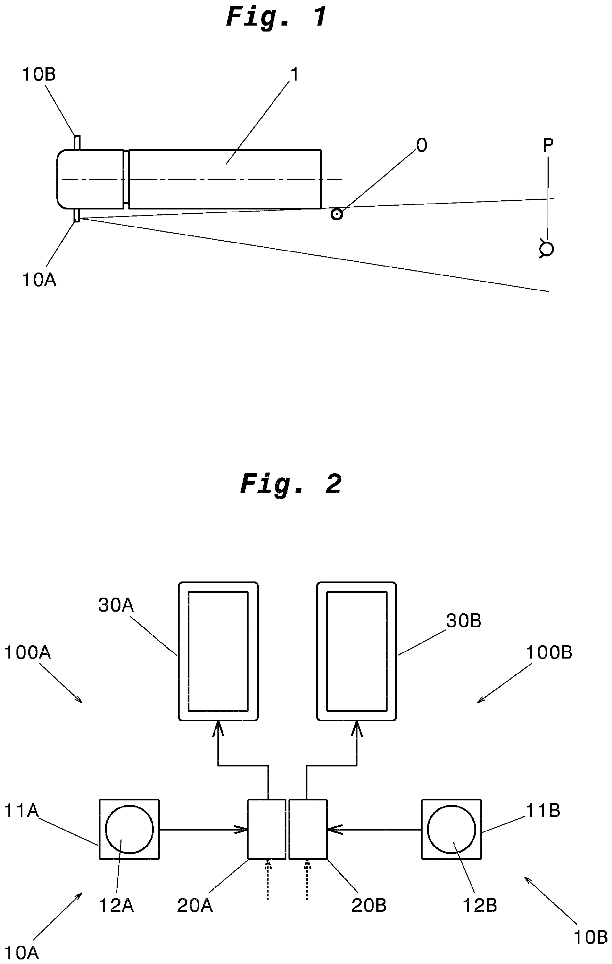

Fig. 1 zeigt eine Draufsicht auf ein Nutzfahrzeug 1, vorliegend ein Lastkraftwagen (LKW) mit einer Zugmaschine und einem Auflieger /Anhänger. An der linken und rechten Seite der Zugmaschine ist jeweils eine Bildaufnahmeeinheit 10A, 10B angebracht, die geeignet ist, die Fahrzeugumgebung, die sich jeweils links bzw. rechts neben dem Fahrzeug nach hinten erstreckt, in Form von Bilddaten aufzunehmen. In dem sich in der Draufsicht kegelförmig nach hinten aufspannenden Sichtbereich der Bildaufnahmeeinheit 10A befinden sich ein Objekt O und eine Person P. Das Objekt O befindet sich in der Nähe der linken hinteren Ecke des Aufliegers. Die Person P befindet sich hinter dem LKW 1 in etwa in der Mitte der Sichtkegels der Aufnahmeeinheit 10A.

Fig. 2 zeigt einen schematischen Aufbau zweier Sichtsysteme 100A, 100B gemäß der vorliegenden Erfindung, die beispielsweise ein Sichtsystem 100A für die linke Fahrzeugseite und ein Sichtsystem 100B für die rechte Fahrzeugseite bilden. Die Sichtsysteme 100A, 100B weisen jeweils die aus Fig. 1 bekannte Aufnahmeeinheit 10A, 10B, eine Berechnungseinheit 20A, 20B und eine Wiedergabeeinheit 30A, 30B auf. Damit entsprechen die Sichtsysteme 100A, 100B jeweils einem indirekten Sichtsystem, beispielsweise einem Kamera-Monitor-System und können somit als Spiegelersatzsystem eingesetzt werden, mit dem indirekt die Umgebung eines Fahrzeug eingesehen werden kann.

Die jeweilige Aufnahmeeinheit 10A, 10B ist angepasst zum Aufnehmen von Bildern einer Umgebung um das Fahrzeug 1 in Form von Bilddaten. Dazu ist die Aufnahmeeinheit 10A, 10B auf geeignete Art und Weise an dem Fahrzeug angebracht. Die Aufnahmeeinheit 10A, 10B kann eine Kamera sein, insbesondere eine Kamera mit einem Sensor nach einer CMOS-oder CCD-Technologie, oder ein jeglicher anderer Bildsensor, der geeignet ist, bewegte Bilder aufzunehmen. Es können mehrere Aufnahmeeinheiten 10A, 10B pro Sichtsystem 100A, 100B vorgesehen sein. Die Aufnahmeeinheit 10A, 10B steht mit der jeweiligen Berechnungseinheit 20A, 20B in Verbindung, beispielsweise über Verbindungskabel oder Funk.

Die jeweilige Berechnungseinheit 20A, 20B ist angepasst zum Verarbeiten der von der Aufnahmeeinheit 10A, 10B aufgenommenen Bilddaten. Dazu verwendet die Berechnungseinheit 20A, 20B vorgegebene Bildparameter, wie beispielsweise die Auflösung, den Kontrast, die Farbsättigung, -temperatur und -töne, die Belichtung, etc., und ändert diese oder andere Parameter, insbesondere zum Zweck der Optimierung des auf der Wiedergabeeinheit 30A, 30B dargestellten Bilds. Die Berechnungseinheiten 20A, 20B werden daher auch als Bildbearbeitungseinheiten bezeichnet. Die Berechnungseinheiten 20A, 20B können auch Signale von anderen Elementen als den Bildaufnahmeeinheiten 10A und 10B empfangen bzw. Signale an weitere Elemente des Sichtsystems ausgeben (siehe gestrichelte Pfeile).

Die jeweilige Wiedergabeeinheit 30A, 30B ist angepasst zum Anzeigen von Bildern, die von der jeweiligen Aufnahmeeinheit 10A, 10B aufgenommen und von der jeweiligen Berechnungseinheit 20A, 20B verarbeitet wurden. Die Wiedergabeeinheit 30A, 30B kann ein Monitor, wie beispielsweise ein LCD-, TFT- oder LED-Monitor, sein. Es können mehrere Wiedergabeeinheiten 30A, 30B pro Sichtsystem 100A, 100B vorgesehen sein. Die Wiedergabeeinheiten 30A, 30B sind vorzugsweise im Inneren einer Fahrerkabine eines Fahrzeugs installiert, weiter vorzugsweise an einer oder beiden A-Säulen eines Fahrzeugs, so dass sie während der Fahrt ungehindert von einem Fahrer eingesehen werden können.

Das Sichtsystem 100A ist identisch zu dem Sichtsystem 100B aufgebaut, weswegen nachfolgend lediglich das Sichtsystem 100A beschrieben wird.

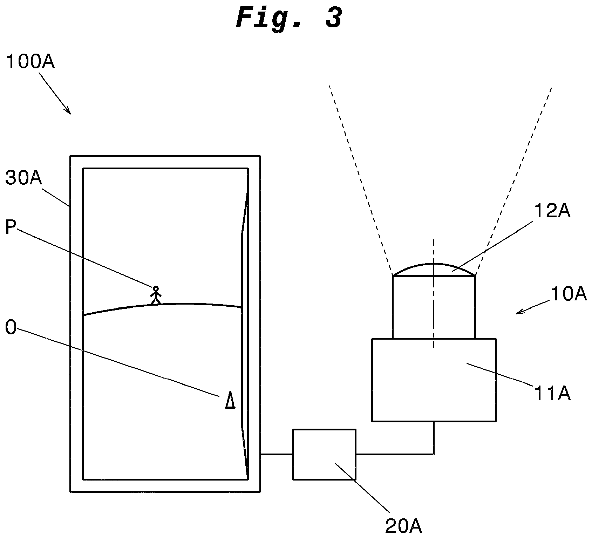

Fig. 3 zeigt eine schematische Ansicht des erfindungsgemäßen Sichtsystems 100A, das die Fahrzeugumgebung, wie sie von der Kamera 10A aus Fig. 1 aufgenommen wird, auf einem Monitor 30A zeigt. Wie in Fig. 3 gezeigt, weist die Kamera 10A ein optisches Element 12A und einen Bildsensor 11A auf. Das optische Element 12A ist das Bauteil der Kamera 10A, das zwischen dem Bildsensor 12A der Kamera 10A und dem Übergang von Kamera 10A zu Fahrzeugumgebung angeordnet ist und bildet damit den äußersten Abschluss der Kamera 10A in einem optischen Pfad, auf dem sich das Licht der Fahrzeugumgebung bewegt bzw. ausbreitet, wenn es in die Kamera 10A einfällt. Das optische Element 12A nimmt die Fahrzeugumgebung mit einem bestimmten, dem entsprechenden optischen Element zugeordneten Sichtbereich (vorliegend ein Sichtkegel, siehe gestrichelte Linie in Fig. 3) auf und hat vorliegend als am weitesten außen liegendes Bauteil eine nach außen konvexe Linse. Der Bildsensor 12A ist eine Vorrichtung zur Aufnahme von Abbildern der Fahrzeugumgebung aus Licht. Der Bildsensor 12A ist im optischen Pfad hinter dem optischen Element und damit im Inneren der Kamera 10A angeordnet. Das optische Element 12A und der Bildsensor 11A bilden zusammen die wesentlichen Elemente der Kamera 10A. Weitere Bauteile, wie z.B. ein Gehäuse können ebenfalls Teil der Kamera 10A sein.

Die von der Kamera 10A aufgenommenen Bilddaten werden an die Bildbearbeitungseinheit 20A weitergeleitet, die die Bilddaten derart bearbeitet (z.B. hinsichtlich Kontrast, Auflösung, Helligkeit, etc.), dass sie auf dem Monitor 30A für den Fahrer des LKW 1 gut zu erkennen sind und ggf. gesetzlichen Vorgaben, wie z.B. in der UN/ECE R46 definiert, entsprechen.

Auf dem Monitor 30A ist die Fahrzeugumgebung auf der linken Seite des LKW 1 gezeigt. Insbesondere sind auf der rechten Seite des Monitors 30A ein Teil des LKW 1 und das Objekt O (Pylone) zu sehen, während mittig auf dem Monitor die Person P gezeigt ist.

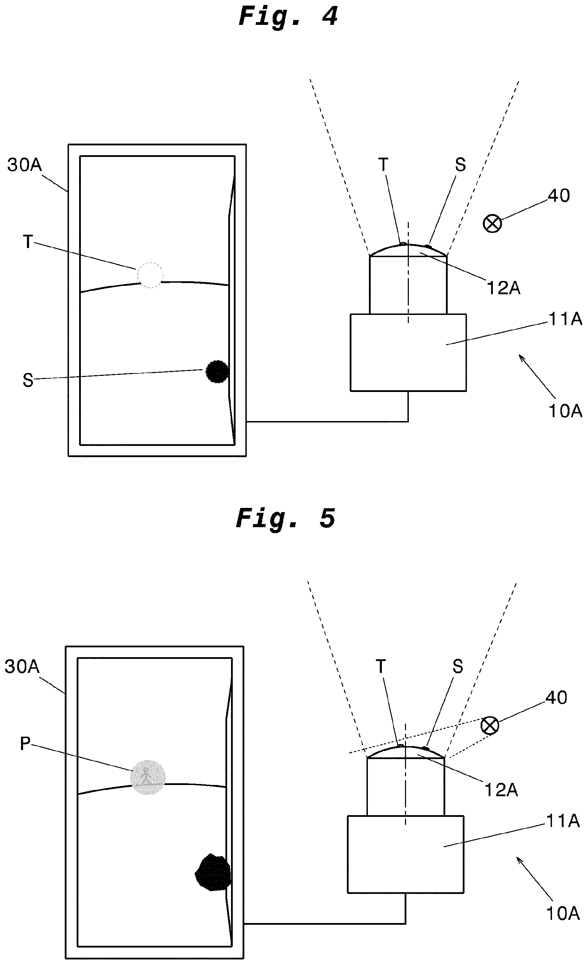

In Fig. 4 ist die schematische Ansicht des Sichtsystems 100A aus Fig. 3 gezeigt, wobei vorliegend die Bildbearbeitungseinheit 20A in die Kamera 10A integriert ist, sich zwei Fremdkörper auf dem optischen Element 12A befinden und das Sichtsystem 100A zusätzlich eine Lichtquelle 40 aufweist. Der eine Fremdkörper befindet sich auf einer linken Seite des optischen Elements 12A ausgehend von einer Mittellinie (siehe Strich-Punkt-Linie in Fig. 4) und ist ein Wassertropfen T. Der andere Fremdkörper befindet sich auf einer rechten Seite des optischen Elements 12A ausgehend von der Mittellinie und ist eine Verschmutzung S (z.B. ein Erdklumpen). Die Lichtquelle 40 ist außerhalb des Sichtkegels des optischen Elements 12A angeordnet, so dass sie im eingeschalteten Zustand von außen Lichtstrahlen zu dem optischen Element 12A sendet. Bei der Fig. 4 zugrunde liegenden Situation ist die Lichtquelle 40 ausgeschaltet.

Wie in Fig. 4 gezeigt ist, werden die beiden Fremdkörper - bei ausgeschalteter Lichtquelle 40 - unterschiedlich auf dem Monitor 30A angezeigt. Die Verschmutzung S wird auf dem Bildsensor 11A und entsprechend auf dem Monitor 30A als dunkler Fleck angezeigt, der die Umgebung, die hinter der Verschmutzung liegt, verdeckt. Der Fahrer kann somit zwar die Verschmutzung erkennen, kann jedoch nicht die Fahrzeugumgebung hinter der Verschmutzung erkennen und entsprechend nicht, ob und was sich hinter der Verschmutzung befindet. Dies kann zu gefährlichen Situationen im Straßenverkehr und ggf. zu Unfällen führen. Durch den Wassertropfen T wird auf dem Bildsensor 11A die Fahrzeugumgebung, die sich hinter dem Wassertropfen befindet verschwommen und damit unscharf aufgenommen. Entsprechend wird auch auf dem Monitor 30A die Umgebung hinter dem Wassertropfen verschwommen und damit für den Fahrer undeutlich abgebildet. Dadurch kann der Fahrer nicht nur nicht erkennen, ob und ggf. was sich in er Fahrzeugumgebung hinter dem Wassertropfen befindet, sondern kann mitunter auch nicht erkennen, dass sich ein Wassertropfen auf dem optischen Element 12A befindet.

In Fig. 5 wird das optische Element 12A von einer Lichtquelle 40 angestrahlt. Die Lichtquelle 40 ist derart zum optischen Element 12A angeordnet, dass das von ihr ausgestrahlte Licht von außen auf das optische Element auftrifft. Mit anderen Worten läuft das Licht der Lichtquelle 40 einen optischen Pfad entlang, der sich von der Umgebung des Fahrzeugs 1 und damit der Kamera 10A durch das optische Element 12A hindurch zu dem Bildsensor 11A erstreckt.

Durch die Beleuchtung des optischen Elements 12A werden die Fremdkörper, d.h. die Verschmutzung S und der Wassertropfen T, auf dem Bildsensor 11A kontrastreicher abgebildet als dies ohne Beleuchtung, wie in Fig. 4 gezeigt, der Fall ist. D.h. die Fremdkörper S, T werden auf dem Bildsensor 11A deutlich erkennbar und damit auffällig abgebildet. Die Abbildung der Fahrzeugumgebung mit den deutlich abgebildeten Fremdkörpern wird über eine (nicht gezeigte) Bildbearbeitungseinrichtung zu dem Monitor weiter geleitet. Die Bildbearbeitungseinrichtung bearbeitet die Bilddaten jedoch lediglich im Hinblick auf Bildparameter, die eine zuverlässige und ggf. geforderte Anzeigequalität der Fahrzeugumgebung ermöglichen (z.B. Auflösung, Helligkeit, etc.). Es ist keine Nachbearbeitung der Bilddaten zur Kenntlichmachung der Fremdkörper S, T notwendig.

Wie in Fig. 5 gezeigt ist, wird die Verschmutzung S auf dem optischen Element 12A dem Fahrer als dunkler Fleck mit unregelmäßigen Rändern angezeigt, der größer als die Anzeige der Verschmutzung S auf dem Monitor 30a in Fig. 4 ist. Genauer wird das von der Lichtquelle 40 ausgestrahlte Licht dadurch, dass die Verschmutzung sehr dunkel ist (z.B. Erde), von der Verschmutzung S absorbiert und als dunkler Fleck auf dem Bildsensor 11A abgebildet. Dadurch kann der Fahrer rasch erkennen, dass das optische Element 12A verschmutzt ist. Der Wassertropfen T hingegen wird dem Fahrer auf dem Monitor 30A als heller Fleck mit schärferen Konturen verglichen zu dem hellen Fleck auf dem Monitor aus Fig. 4 gezeigt. Genauer wird das von der Lichtquelle 40 ausgestrahlte Licht dadurch, dass der Wassertropfen nahezu transparent ist, von dem Wassertropfen T reflektiert. So wird wenigstens ein Teil der von der Lichtquelle 40 ausgesandten Lichtstrahlen auf den Bildsensor 11A gelenkt. Anhand der schärferen Konturen kann der Fahrer rasch erkennen, dass sich ein Fremdkörper auf dem optischen Element 12A befindet und erkennt, wie in Fig. 5 gezeigt ist, sogar wenigstens teilweise die Umgebung, die von dem Wassertropfen T verdeckt wird (Person P ist leicht zu sehen).

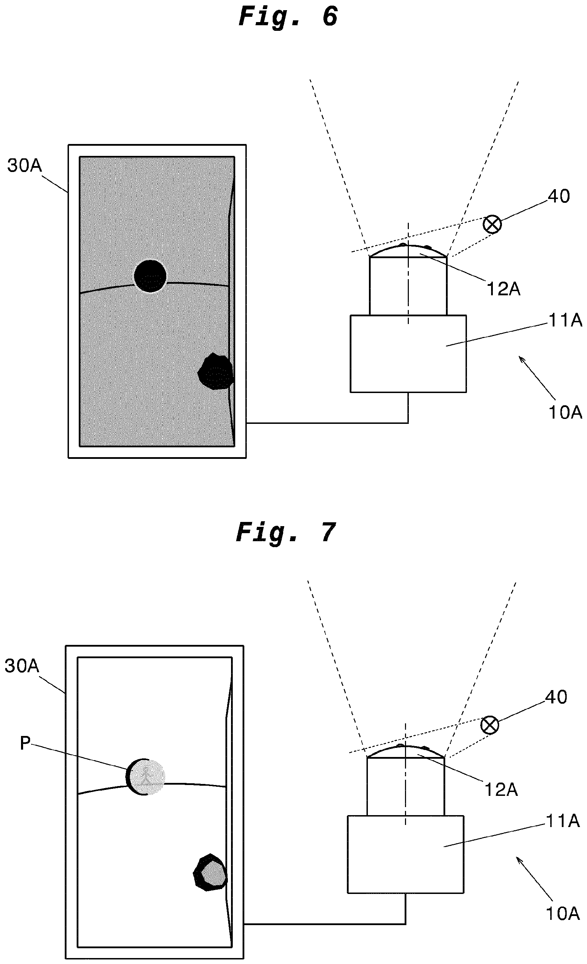

Fig. 6 zeigt eine Anzeige der Fremdkörper S, T bei dunkler Fahrzeugumgebung, wie beispielsweise bei Nacht. Wie in Fig. 6 gezeigt ist, erhöht eine Bestrahlung des optischen Elements 12A bei dunkler Fahrzeugumgebung die Auffälligkeit bzw. Erkennbarkeit von Fremdkörpern S, T bei Bestrahlung mit Licht derart, dass sowohl die Verschmutzung S als auch der Wassertropfen T als dunkle Flecke auf dem Monitor 30A angezeigt werden.

Fig. 7 zeigt eine Anzeige von Fremdkörpern S, T auf dem Monitor 30A mittels Schattenbildung. Die Anzeige ähnelt der Anzeige aus Fig. 5. Jedoch ist sowohl die Anzeige des Wassertropfens T als auch der Verschmutzung S mit einem Schatten versehen, um die Auffälligkeit des Fremdkörpers S, T auf dem Monitor 30A zu erhöhen.

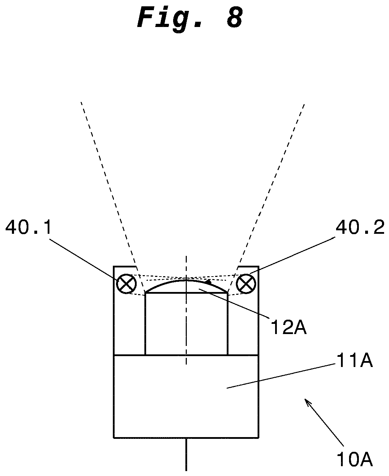

Fig. 8 zeigt eine Kamera 10A, die von zwei Lichtquellen 40.1, 40.2 bestrahlt wird. Die Lichtquelle 40.1 ist in Fig. 8 links neben dem optischen Element 12A angeordnet, während die Lichtquellen 40.2 in Fig. 8 rechts neben dem optischen Element 12A angeordnet ist. Beide Lichtquellen 40.1, 40.2 senden ihre Lichtstrahlen auf das optische Element 12A, so dass die Lichtstrahlen von außerhalb der Kamera 10A durch das optische Element 12A hindurch auf den Bildsensor 11A auftreffen und dort zusammen mit dem Licht der Fahrzeugumgebung die Fahrzeugumgebung abbilden.

Es ist auch denkbar mehr als zwei Lichtquellen 40 um das optische Element 12A in regelmäßigen oder unregelmäßigen Abständen anzuordnen oder einen Lichtleiter an eine oder mehrere Lichtquellen 40 anzuschließen, durch den/die das Licht der Lichtquellen wenigstens teilweise um das optischen Element herum verteilt und ggf. gebündelt wird, so dass es das optische Element 12A zuverlässig trifft.

Die Lichtquelle 40 kann jede Lichtquelle mit jeder Wellenwelle sein. LEDs, OLEDs, Laser, Glühbirnen, Schwarzlicht, etc. sind beispielsweise als Lichtquelle 40 denkbar. Dabei ist es vorteilhaft, wenn sich die Lichtquelle in einer gewissen räumlichen Nähe zu dem optischen Element 12A befindet, wie z.B. in einem Bereich von 0 bis 30mm. Dabei sollte die Lichtquelle jedoch außerhalb des Sichtbereichs bzw. des Sichtkegels des optischen Elements 12A liegen, um nicht selbst auf dem Bildsensor 11A abgebildet zu werden. Um Fremdkörper S, T noch deutlicher auf dem Bildsensor 11A abzubilden, kann das optische Element 12A mit einem Filter, wie beispielsweise einer Beschichtung, versehen sein, die dazu führt, dass Fremdkörper S, T bei bestimmten Wellenlängen (wie z.B. ultraviolette Strahlen bei Schwarzlicht) besonders kontrastreich bzw. auffällig auf dem Bildsensor abgebildet werden.

Die deutliche Anzeige von Fremdkörpern S, T auf dem optischen Element 12A kann vom Fahrer selbst durch eine entsprechend kontrastreiche bzw. konturscharfe Anzeige auf dem Monitor 30A bemerkt werden. Alternativ oder zusätzlich kann die Bearbeitungseinheit 20A das Vorhandensein von Fremdkörpern S, T durch kontrastreiche Abbildung der Fremdkörper S, T auf dem Bildsensor 11A detektieren. Entsprechend kann der Fahrer entweder ein Signal ausgeben (Betätigen eines Knopfes, Touchpads, o.ä.), das entweder die Reinigung des optischen Elements 12A veranlasst (wie z.B. eine automatische Reinigung), oder kann das Fahrzeug anhalten und das optische Element von Hand reinigen. Die Bildbearbeitungseinheit 20A oder eine andere Steuereinheit kann ebenfalls Signale zur Reinigung des optischen Elements 12A ausgeben und/oder kann dem Fahrer durch entsprechende Signale (z.B. Overlays, Warntöne, etc.) anzeigen, dass das optische Element 12A wenigstens einen Fremdkörper S, T aufweist und die Sicht in die Fahrzeugumgebung eingeschränkt ist, so dass der Fahrer entsprechend reagieren kann. Die Bildbearbeitungseinheit 20A oder die andere Steuereinheit können parallel zu dem Fahrer das Vorhandensein von Fremdkörpern überwachen oder kann immer nur dann zum Einsatz kommen, wenn der Fahrer den Monitor nicht einsieht oder einsehen kann (wie bei komplizierten Fahrmanövern). Die vorliegende Erfindung dient somit der Erkennung und Überwachung der Einsatzfähigkeit der Kamera 10A.

Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### BEZUGSZEICHENLISTE

- 1: Fahrzeug
- 10A, 10B: Bildaufnahmeeinheit, Kamera
- 11A. 11B: Bildsensor
- 12A, 12B: optisches Element
- 20A, 20B: Bildbearbeitungseinheit
- 30A, 30B: Bildwiedergabeeinheit, Monitor
- 40, 40.1, 40.2: Lichtquelle
- 100A, 100B: Sichtsystem
- O: Objekt
- P: Person
- S: Verschmutzung
- T: Wassertropfen

## Patentansprüche

1. Sichtsystem (100A, 100B) für ein Fahrzeug (1), enthaltend
wenigstens eine Bildaufnahmeeinheit (10A, 10B) zum Aufnehmen von Bilddaten eines Bereichs um das Fahrzeug (1), wobei die Bildaufnahmeeinheit (10A, 10B) einen Bildsensor (11A, 11B) und ein optisches Element (12A, 12B) aufweist,
wenigstens eine Bildbearbeitungseinheit (20A, 20B) zum Bearbeiten der von der Bildaufnahmeeinheit (10A, 10B) aufgenommenen Bilddaten, und
wenigstens eine Lichtquelle (40, 40.1, 40.2) zum Beleuchten des optischen Elements (12A, 12B),
wobei das Sichtsystem ausgebildet ist, durch die Beleuchtung des optischen Elements (12A, 12B) die Erkennbarkeit eines Fremdkörpers (S, T), der sich auf dem optischen Element (12A, 12B) befindet, auf dem Bildsensor (11A, 11B) der Bildaufnahmeeinheit (10A, 10B) zu verdeutlichen, wobei die von der Lichtquelle (40, 40.1, 40.2) ausgesandten Lichtstrahlen von außerhalb der Bildaufnahmeeinheit (10A, 10B) in das optische Element (12A, 12B) einfallen.

2. Sichtsystem (100A, 100B) nach Anspruch 1, ferner enthaltend wenigstens eine Bildwiedergabeeinheit (30A, 30B) zum Wiedergeben der von der Bildbearbeitungseinheit (20A, 20B) bearbeiteten Bilddaten, und/oder ferner enthaltend eine Bilderkennungseinheit, die die verdeutlichte Erkennbarkeit des Fremdkörpers (S, T) auf dem Bildsensor (11A, 11B) über einen Algorithmus erkennt.

3. Sichtsystem (100A, 100B) nach Anspruch 1 oder 2, wobei die Lichtquelle (40, 40.1, 40.2) außerhalb des Sichtbereichs des optischen Elements (12A, 12B) angeordnet ist, und/oder
wobei die Lichtquelle (40, 40.1, 40.2) ausgebildet ist, dauerhaft oder in zeitlich definierten Abständen zu operieren, und/oder
wobei die Lichtquelle (40, 40.1, 40.2) eine Lichtstärke und/oder Leuchtdichte und/oder einen Lichtstrom aufweist, die jeweils einstellbar sind, und/oder
wobei sich die Lichtquelle (40, 40.1, 40.2) in räumlicher Nähe zum optischen Element (12A, 12B) befindet.

4. Sichtsystem (100A, 100B) nach einem der vorhergehenden Ansprüche, wobei der Kontrast des Fremdkörpers (S, T) auf dem Bildsensor (11A, 11B) durch Reflexion und/oder Absorption der von der Lichtquelle (40, 40.1, 40.2) ausgesandten Lichtstrahlen an dem Fremdkörper (S, T) verdeutlicht wird.

5. Sichtsystem (100A, 100B) nach einem der vorhergehenden Ansprüche, wobei die Lichtquelle (40, 40.1, 40.2) derart angeordnet ist, dass die von der Lichtquelle (40, 40.1, 40.2) ausgesandten Lichtstrahlen direkt auf das optische Element (12A, 12B) auftreffen, oder wobei die Lichtquelle (40, 40.1, 40.2) derart angeordnet ist, dass die von der Lichtquelle (40, 40.1, 40.2) ausgesandten Lichtstrahlen indirekt auf das optische Element (12A, 12B) auftreffen.

6. Sichtsystem (100A, 100B) nach einem der vorhergehenden Ansprüche, wobei die Lichtquelle (40, 40.1, 40.2) derart angeordnet ist, dass der Hauptteil der von der Lichtquelle (40, 40.1, 40.2) ausgesandten Lichtstrahlen auf einen Bereich des optischen Elements (12A, 12B) auftreffen, der auf dem Bildsensor (11A, 11B) abgebildet wird.

7. Sichtsystem (100A, 100B) nach einem der vorhergehenden Ansprüche, wobei die Lichtquelle (40, 40.1, 40.2) ausgebildet ist, mit unterschiedlichen Lichtwellen zu operieren, und/oder eine Infrarot-Lichtquelle ist.

8. Sichtsystem (100A, 100B) nach Anspruch 3, wenn rückbezogen auf Anspruch 2, wobei die Lichtquelle (40, 40.1, 40.2) ausgebildet ist, abhängig von der Bildrate des Bildsensors (11A, 11B) und/oder der Bilderkennungseinheit bzw. der Wiedergabeeinheit (30A, 30B) zu operieren.

9. Sichtsystem (100A, 100B) nach einem der vorhergehenden Ansprüche, wobei die Lichtquelle (40, 40.1, 40.2) derart zu dem optischen Element (12A, 12B) angeordnet ist, dass die von der Lichtquelle (40, 40.1, 40.2) ausgesandten Lichtstrahlen aus definierten Blickrichtungen in der Fahrzeugumgebung für das menschliche Auge nicht sichtbar sind.

10. Sichtsystem (100A, 100B) nach einem der vorhergehenden Ansprüche, wobei das optische Element (12A, 12B) als äußerstes Bauteil ein Frontglas oder eine Linse enthält, und/oder wobei das optische Element (12A, 12B) einen Filter aufweist, der bei Beleuchtung wenigstens einen Beleuchtungsparameter verändert.

11. Sichtsystem (100A, 100B) nach einem der vorhergehenden Ansprüche, wobei mehrere Lichtquellen (40, 40.1, 40.2) vorhanden sind.

12. Sichtsystem (100A, 100B) nach Anspruch 11, wobei eine Sammellinse vorhanden ist, die die Lichtstrahlen der mehreren Lichtquellen (40, 40.1, 40.2) vor Auftreffen auf das optische Element (12A, 12B) bündelt.

13. Sichtsystem (100A, 100B) nach einem der vorhergehenden Ansprüche, wobei die Lichtquelle (40, 40.1, 40.2) einen Lichtleiter enthält.

14. Sichtsystem (100A, 100B) nach einem der vorhergehenden Ansprüche, wobei das Sichtsystem ein Spiegelersatzsystem für ein Nutzfahrzeug ist.

15. Spiegelersatzsystem für ein Fahrzeug mit einem Sichtsystem (100A, 100B) nach einem der Ansprüche 1 bis 14.

## Claims

1. View system (100A, 100B) for a vehicle (1), comprising
at least one image capture unit (10A, 10B) for capturing image data of an area around the vehicle (1), wherein the image capture unit (10A, 10B) has an image sensor (11A, 11B) and an optical element (12A, 12B),
at least one image processing unit (20A, 20B) for processing the image data captured by the image capture unit (10A, 10B), and
at least one light source (40, 40.1, 40.2) for illuminating the optical element (12A, 12B),
wherein the view system is configured to highlight the recognisability of a foreign particle (S, T), which is located on the optical element (12A, 12B), on the image sensor (11A, 11B) of the image capture unit (10A, 10B) by the illumination of the optical element (12A, 12B), wherein the light rays emitted by the light source (40, 40.1, 40.2) fall into the optical element (12A, 12B) from outside of the image capture unit (10A, 10B).

2. View system (100A, 100B) according to claim 1, further comprising at least one image reproduction unit (30A, 30B) for reproducing the image data processed by the image processing unit (20A, 20B), and/or further comprising an image recognition unit, which recognises the highlighted recognisability of the foreign particle (S, T) on the image sensor (11A, 11B) by means of an algorithm.

3. View system (100A, 100B) according to claim 1 or 2, wherein the light source (40, 40.1, 40.2) is arranged outside of the area of view of the optical element (12A, 12B), and/or
wherein the light source (40, 40.1, 40.2) is configured to operate permanently or in timely defined intervals, and/or
wherein the light source (40, 40.1, 40.2) has a luminous intensity and/or a luminous density and/or a luminous flux, each of which is adjustable, and/or
wherein the light source (40, 40.1, 40.2) is located in spatial vicinity to the optical element (12A, 12B).

4. View system (100A, 100B) according to any one of the preceding claims, wherein the contrast of the foreign particle (S, T) on the image sensor (11A, 11B) is highlighted by reflection and/or absorption of the light rays emitted by the light source (40, 40.1, 40.2) at the foreign particle (S, T).

5. View system (100A, 100B) according to any one of the preceding claims, wherein the light source (40, 40.1, 40.2) is arranged such that the light rays emitted by the light source (40, 40.1, 40.2) hit directly the optical element (12A, 12B), or wherein the light source (40, 40.1, 40.2) is arranged such that the light rays emitted by the light source (40, 40.1, 40.2) hit indirectly the optical element (12A, 12B).

6. View system (100A, 100B) according to any one of the preceding claims, wherein the light source (40, 40.1, 40.2) is arranged such that the main part of the light rays emitted by the light source (40, 40.1, 40.2) hit a portion of the optical element (12A, 12B) which is depicted on the image sensor (11A, 11B).

7. View system (100A, 100B) according to any one of the preceding claims, wherein the light source (40, 40.1, 40.2) is configured to operate with different light waves, and/or is an infrared light source.

8. View system (100A, 100B) according to claim 3, if dependent on claim 2, wherein the light source (40, 40.1, 40.2) is configured to operate dependent on the image rate of the image sensor (11A, 11B) and/or the image recognition unit and the reproduction unit (30A, 30B), respectively.

9. View system (100A, 100B) according to any one of the preceding claims, wherein the light source (40, 40.1, 40.2) is arranged to the optical element (12A, 12B) such that the light rays emitted by the light source (40, 40.1, 40.2) are not visible from defined view directions in the vehicle environment for the human eye.

10. View system (100A, 100B) according to any one of the preceding claims, wherein the optical element (12A, 12B) comprises as the outermost component a front glass or a lens, and/or wherein the optical element (12A, 12B) has a filter, which changes at least one illumination parameter during illumination.

11. View system (100A, 100B) according to any one of the preceding claims, wherein a plurality of light sources (40, 40.1, 40.2) is present.

12. View system (100A, 100B) according to claim 11, wherein a converging lens is present, which bundles the light rays of the plurality of light sources (40, 40.1, 40.2) before hitting the optical element (12A, 12B).

13. View system (100A, 100B) according to any one of the preceding claims, wherein the light source (40, 40.1, 40.2) comprises an optical wave guide.

14. View system (100A, 100B) according to any one of the preceding claims, wherein the view system is a mirror replacement system for a commercial vehicle.

15. Mirror replacement system for a vehicle with a view system (100A, 100B) according to any one of claims 1 to 14.

## Revendications

1. Système visuel (100A, 100B) pour un véhicule (1), contenant
au moins une unité d'enregistrement d'image (10A, 10B) pour l'enregistrement de données d'image d'une zone autour du véhicule (1), dans lequel l'unité d'enregistrement d'image (10A, 10B) présente un capteur d'image (11A, 11B) et un élément optique (12A, 12B),
au moins une unité de traitement d'image (20A, 20B) pour le traitement des données d'image enregistrées par l'unité d'enregistrement d'image (10A, 10B), et
au moins une source de lumière (4, 40.1, 40.2) pour l'éclairage de l'élément optique (12A, 12B),
dans lequel le système visuel est réalisé afin d'illustrer par l'éclairage de l'élément optique (12A, 12B) la perceptibilité d'un corps étranger (S, T) qui se trouve sur l'élément optique (12A, 12B), sur le capteur d'image (11A, 11B) de l'unité d'enregistrement d'image (10A, 10B), dans lequel les rayons de lumière émis par la source de lumière (40, 40.1, 40.2) de l'extérieur de l'unité d'enregistrement d'image (10A, 10B) pénètrent dans l'élément optique (12A, 12B).

2. Système visuel (100A, 100B) selon la revendication 1, contenant de plus au moins une unité de rendu d'image (30A, 30B) pour le rendu des données d'image traitées par l'unité de traitement d'image (20A, 20B), et/ou contenant de plus une unité de reconnaissance d'image qui reconnaît la perceptibilité illustrée du corps étranger (S, T) sur le capteur d'image (11A, 11B) par le biais d'un algorithme.

3. Système visuel (100A, 100B) selon la revendication 1 ou 2, dans lequel la source de lumière (40, 40.1, 40.2) est agencée en dehors de la zone visuelle de l'élément optique (12A, 12B), et/ou
dans lequel la source de lumière (40, 40.1, 40.2) est réalisée afin d'opérer durablement ou dans des intervalles temporellement définis, et/ou
dans lequel la source de lumière (40, 40.1, 40.2) présente une intensité lumineuse et/ou une luminance et/ou un flux lumineux qui sont réglables respectivement, et/ou
dans lequel la source de lumière (40, 40.1, 40.2) se trouve à proximité spatiale de l'élément optique (12A, 12B).

4. Système visuel (100A, 100B) selon l'une quelconque des revendications précédentes, dans lequel le contraste du corps étranger (S, T) est illustré sur le capteur d'image (11A, 11B) par réflexion et/ou absorption des rayons lumineux émis par la source de lumière (40, 40.1, 40.2) au niveau du corps étranger (S, T).

5. Système visuel (100A, 100B) selon l'une quelconque des revendications précédentes, dans lequel la source de lumière (40, 40.1, 40.2) est agencée de telle manière que les rayons lumineux émis par la source de lumière (40, 40.1, 40.2) atteignent directement l'élément optique (12, 12B), ou dans lequel la source de lumière (40, 40.1, 40.2) est agencée de telle manière que les rayons lumineux émis par la source de lumière (40, 40.1, 40.2) atteignent indirectement l'élément optique (12A, 12B).

6. Système visuel (100A, 100B) selon l'une quelconque des revendications précédentes, dans lequel la source de lumière (40, 40.1, 40.2) est agencée de telle manière que la partie principale des rayons lumineux émis par la source de lumière (40, 40.1, 40.2) atteigne une zone de l'élément optique (12A, 12B), laquelle est représentée sur le capteur d'image (11A, 11B).

7. Système visuel (100A, 100B) selon l'une quelconque des revendications précédentes, dans lequel la source de lumière (40, 40.1, 40.2) est réalisée afin d'opérer avec différentes ondes de lumière et/ou est une source de lumière à infrarouge.

8. Système visuel (100A, 100B) selon la revendication 3, lorsqu'elle se réfère à la revendication 2, dans lequel la source de lumière (40, 40.1, 40.2) est réalisée afin d'opérer en fonction du débit d'image du capteur d'image (11A, 11B) et/ou de l'unité de reconnaissance d'image ou de l'unité de rendu (30A, 30B).

9. Système visuel (100A, 100B) selon l'une quelconque des revendications précédentes, dans lequel la source de lumière (40, 40.1, 40.2) est agencée par rapport à l'élément optique (12A, 12B) de telle manière que les rayons lumineux émis par la source de lumière (40, 40.1, 40.2) ne soient pas visibles depuis des sens de vision définis dans l'environnement du véhicule pour l'œil humain.

10. Système visuel (100A, 100B) selon l'une quelconque des revendications précédentes, dans lequel l'élément optique (12A, 12B) contient comme composant le plus extérieur un verre frontal ou une lentille, et/ou dans lequel l'élément optique (12A, 12B) présente un filtre qui modifie lors de l'éclairage au moins un paramètre d'éclairage.

11. Système visuel (100A, 100B) selon l'une quelconque des revendications précédentes, dans lequel plusieurs sources de lumière (40, 40.1, 40.2) sont présentes.

12. Système visuel (100A, 100B) selon la revendication 11, dans lequel une lentille collectrice est présente, laquelle concentre les rayons lumineux des plusieurs sources de lumière (40, 40.1, 40.2) avant l'atteinte de l'élément optique (12A, 12B).

13. Système visuel (100A, 100B) selon l'une quelconque des revendications précédentes, dans lequel la source de lumière (40, 40.1, 40.2) contient un conducteur lumineux.

14. Système visuel (100A, 100B) selon l'une quelconque des revendications précédentes, dans lequel le système visuel est un système de remplacement de rétroviseur pour un véhicule utilitaire.

15. Système de remplacement de rétroviseur pour un véhicule avec un système visuel (100A, 100B) selon l'une quelconque des revendications 1 à 14.
